# EUROPEAN PATENT SPECIFICATION

(11) **EP 1 999 955 B1**
(45) Date of publication and mention of the grant of the patent: **20.04.2011**
(21) Application number: 07708520.7
(22) Date of filing: 19.01.2007
(51) Int. Cl.: H04N 7/08, H04L 27/26, G08G 1/09

(54) **METHOD FOR TRANSMITTING AND RECEIVING TRAFFIC INFORMATION AND APPARATUS THEREOF**
VERFAHREN ZUM SENDEN UND EMPFANGEN VON VERKEHRSINFORMATIONEN UND VORRICHTUNG DAFÜR
PROCEDE POUR TRANSMETTRE ET RECEVOIR DES INFORMATIONS CONCERNANT LE TRAFIC ET APPAREIL PERMETTANT SA MISE EN OEUVRE

(30) Priority: 19.01.2006 US 759963 P; 13.10.2006 KR 20060099822
(43) Date of publication of application: 10.12.2008
(73) Proprietor: LG Electronics Inc., Yongdungpo-gu Seoul 150-010 (KR)
(72) Inventor: KIM, Jin Pil, Seoul 137-724 (KR); CHOI, In Hwan, Gyeonggi-do 427-740 (KR); HONG, Ho Taek, Seoul 135-820 (KR); KIM, Young In, Seoul 151-052 (KR)
(74) Representative: Cabinet Plasseraud
(86) International application number: PCT/KR2007/000321
(87) International publication number: WO 2007/083944

(56) References cited:
- EP-A- 1 445 750
- EP-A- 1 492 259
- WO-A-00/39774
- WO-A-2005/020576
- WO-A1-02/13161
- KR-A- 20010 016 252
- KR-A- 20060 002 468
- US-A1- 2004 246 888
- US-B2- 6 970 132

## Description

### Technical Field

The present invention relates to a method for transmitting and receiving traffic information and an apparatus thereof.

### Background Art

With development of mobile telecommunication, a user can receive a broadcasting signal while moving, and can transmit various kinds of additional information along with the broadcasting signal. Since traffic information may be useful to people who desire to travel along a traffic means, a method for transmitting traffic information to a user through various broadcasting media is being studied.
US 2004246888 discloses a data processing apparatus which maps input symbols to be communicated onto a predetermined number of carrier signals of an Orthogonal Frequency Division Multiplexed (OFDM) symbol.
WO 0039774 discloses a terminal and a method for decoding traffic information on a road traffic network, which information is transmitted from a traffic information control centre to a terminal, whereby said traffic information thus transmitted represents at least the status and identity of at least one segment of the road traffic network.

### Disclosure of Invention

### Technical Problem

Although necessity of traffic information increases in accordance with much traffic, a problem occurs in that users feel inconvenience as uniform traffic information is not provided to the users if various types of traffic information are provided to the users through various terminals manufactured by various manufacturers and having different functions.

### Technical Solution

Accordingly, the present invention is directed to a method and apparatus for transmitting and receiving traffic information, which substantially obviates one or more problems due to limitations and disadvantages of the related art.

An object of the present invention is to provide a method and apparatus for transmitting and receiving traffic information, in which traffic information is efficiently transmitted to a mobile terminal.

Another object of the present invention is to provide a method and apparatus for transmitting and receiving traffic information, in which congestion status information of a traffic link among various kinds of traffic information is transmitted to a mobile terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, various kinds of traffic information can be transmitted using broadcasting signals in the form of DVB-H or DVB-T. The present invention proposes a method and an apparatus for transmitting traffic information, according to claims 1 and 5, respectively. There are also proposed an inter-related apparatus and an inter-related method for receiving traffic information, according to claims 8 and 11, respectively. Advantageous Effects

According to the present invetion, traffic information can be provided through a form of DVB-H or DVB-T. In partcluar, congestion and travel time information can be provided through a broadcasting signal proficiently.

### Brief Description of the Drawings

FIG. 1 briefly illustrates a digital multimedia broadcasting system providing traffic information;

FIG. 2 illustrates an example of signal formats of traffic information;

FIG. 3 and FIG. 4 respectively illustrate transport formats of a congestion traffic status container and a location container included in a traffic information message;

FIG. 5 to FIG. 13 illustrate syntaxes of each application in a traffic information message representing congestion traffic;

FIG. 14 illustrates syntax of additional information included in a status component;

FIG. 15 to FIG. 25 illustrate syntaxes of each element of a location container of traffic information;

FIG. 26 to FIG. 28 illustrate location reference tables if location information of traffic information is obtained;

FIG. 29 illustrates one example of an apparatus for transmitting traffic information;

FIG. 30 illustrates signal arrangement according to resultant frames generated by a frame generator in the apparatus of FIG. 29;

FIG. 31 illustrates another example of an apparatus for transmitting traffic information;

FIG. 32 illustrates a diagram of protocol stack, in which IP datagram data will be followd if traffic information is transmitted in IP datagram.

FIG. 33 illustrates an example of services transmitted on a channel, wherein the one service has a type slicing mode and is transmitted to DVB-H and the other service is transmitted to a common channel of DVB-T and DVB-H;

FIG. 34 illustrates location of a descriptor that can be transmitted along with service information of traffic information;

FIG. 35 and FIG. 36 respectively illustrate program information, i.e., a program association table (PAT) and a program map table (PMT) transmitted along with MPEG-2 transport stream (TS) type signal;

FIG. 37 illustrates a descriptor that can parse broadcasting signals including traffic information;

FIG. 38 illustrates an example of an apparatus for receiving traffic information according to the present invention;

FIG. 39 is a flow chart illustrating a method for receiving traffic information according to an embodiment of the present invention; and

FIG. 40 is a flow chart illustrating a method for transmitting and receiving traffic information according to an embodiment of the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

Hereinafter, for understanding of the present invention, traffic information according to the present invention will be described. Examples of traffic information include congestion and travel and time information (CTT), safety driving information (SDI), point of interest (POI) information, public transport information (PTI), road traffic message (RTM), parking information (PKI), traffic status image information (TSI), and news information (NWS). Accordingly, traffic information will be used as a term indicative of information including the aforementioned kinds of information. To facilitate understanding of the present invention, it is to be understood that the term "TPEG" used in the following description and drawings is involved in traffic information.

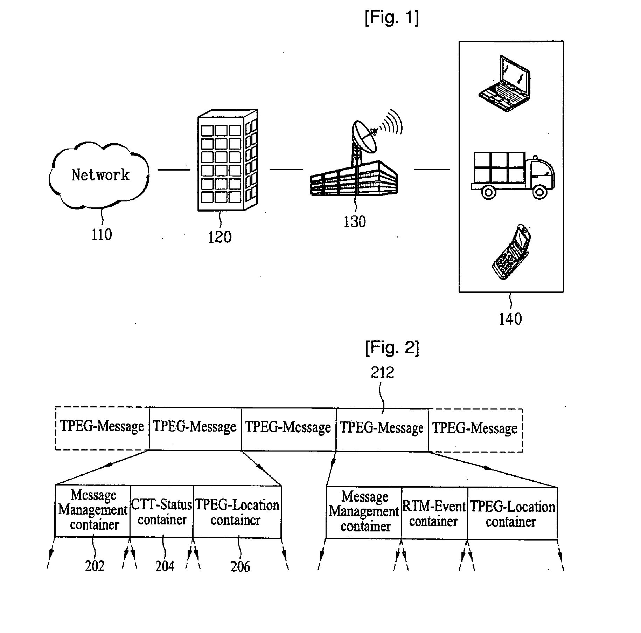

FIG. 1 briefly illustrates a digital multimedia broadcasting system providing traffic information. A method for transmitting and receiving traffic information will be described with reference to FIG. 1. The digital multimedia broadcasting system includes a network 110 collecting traffic information related contents, a traffic information server 120 providing the collected contents, a broadcasting center 130, and a terminal 140. The traffic information server 120 reconstructs various kinds of traffic information collected from other servers via various routes, for example, the network 110, and transmits the reconstructed information to a cellular phone, a vehicle, a personal digital assistant (PDA) 140, or a receiver provided in other portable terminal through a transmitter of the broadcasting center 130. In addition, the terminal includes, but is not limited to, a navigator and a computer such as a notebook computer. The traffic information server 120 may use a data channel of digital broadcasting as a route for transmitting traffic information. Alternatively, the traffic information server 120 may use wire and wireless Internet, for example, a broadband wireless medium such as Wi-Fi or wireless broadband Internet (Wibro), or wired Internet. In particular, the traffic information server 120 may use a transparent data channel (TDC) or a multimedia object transport (MOT) protocol of digital broadcasting media if data service of digital multimedia broadcasting (DMB) is used.

FIG. 2 illustrates an example of signal formats of traffic information. A format of traffic information and a container included in traffic information will be described with reference to FIG. 2.

The format of traffic information transmitted from the traffic information server 120 via wire can have a sequence of message segment as shown in FIG. 2. The message segment includes traffic information, and in FIG. 2, message segment of the traffic information is represented by message. The message segment which contains each type of traffic information includes a message management container 202, a CTT-status container 204, and a TPEG-location container 206.

As described above, the traffic information including various kinds of information can be transmitted. Hereinafter, congestion and travel time information (it may be referred to as CTT or congestion traffic status information) representing road congestion status among various kinds of traffic information will be described as an example of traffic information. Accordingly, the CTT-status container 204 will be referred to as a status container of congestion traffic.

The message management container 202 of congestion traffic information includes message identification information and information of date and time, and is used to manage information received in an apparatus for receiving traffic information. The message identification information which is a necessary element of message includes a message identifier (MID) and a version number (VER). The message identifier (MID) is an identifier of one message related to each status in a service component included in each type of traffic information. In the present invention, the message identification number increases from "0" by "1". If the message identification number reaches 65535 corresponding to maximum number, the message identification number is initiated to "0". The version number means a sequential number for identifying serial messages having a single message identifier. For example, any one of numbers from 0 to 255 may be assigned to the version number, and it is general that the version number may be sequentially increased from 0 to 255.

Examples of date and time included in the message management container may include start time and end time of traffic information, message erasing time, and schedule information. However, since the congestion traffic status information includes current traffic status information of each point rather than information of unexpected status varying every moment, the congestion status information (CTT) may not include start time, end time, message erasing time, and schedule information. The TPEG-location container 206 includes location information intended to notify traffic information.

A number of kinds of congestion status information of the CTT-status container 204 may respectively be transmitted to various service components, wherein each component can be identified by a component identifier.

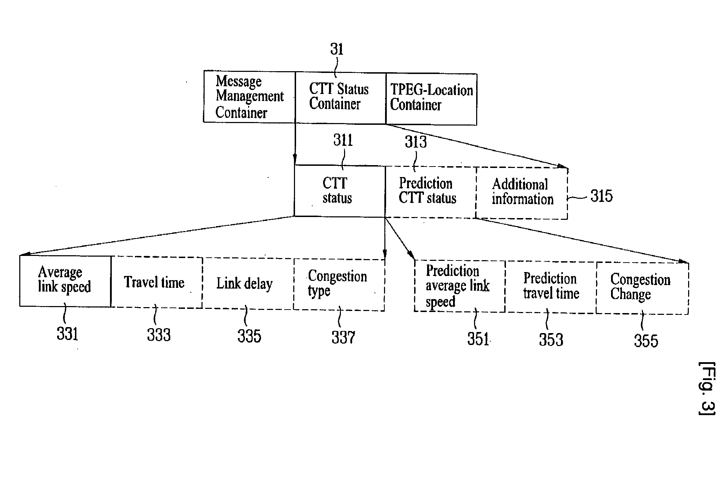

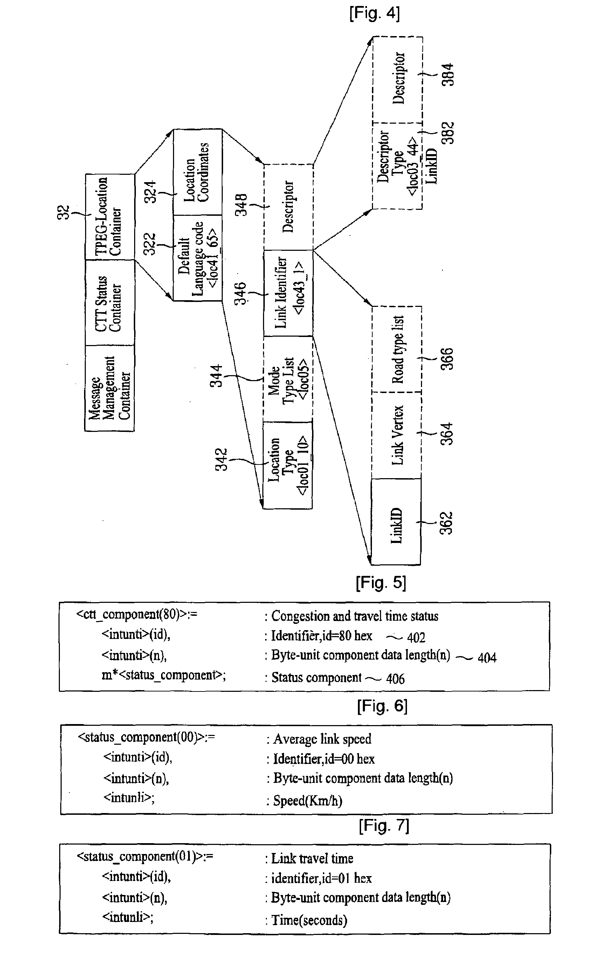

FIG. 3 and FIG. 4 respectively illustrate transport formats of the congestion traffic status container and the TPEG-location container included in the traffic information message.

As shown in FIG. 3, the CTT status container 31 includes a CTT component 311 in which congestion and travel time information (CTT) status is recorded, a CTT component 313 in which CTT status prediction is recorded, and an additional information component 315 in which additional information is recorded.

The CTT component 311 may include a status component 331 in which average link speed is recorded, a status component 333 in which link travel time is recorded, a status component 335 in which link delay time is recorded, and a status component 337 in which congestion type information is recorded.

Hereinafter, a link is used as a road identifier and it is employed in identifying the particular road from traffic information. The average link speed means an average speed of a vehicle in a particular link, the link travel time means duration for which a vehicle passes a particular link. The link delay time means a delayed time for which a vehicle passes a particular link, and congestion type information means predefined typical information of congestion status.

The CTT component 313 may include a CTT status prediction component 351 in which prediction information of average link speed is recorded, a CTT status prediction component 353 in which prediction information of link travel time is recorded, and a CTT status prediction component 355 in which congestion change information is recorded. Namely, the prediction average link speed means a predictive average speed of a vehicle in a particular link at a specific time point, the prediction link travel time means a link travel time predicted at a specific time point, and congestion change information means change of congestion status.

The additional information component 315 may include auxiliary data that is transmitted as part of a TPEG message. The auxiliary data may be text data or audio/video data. For example, the congestion type component 440 may be represented as a predefined code or a text string stored in the additional information component 420. In another example, the additional information component 420 may store video data, such as an image of a moving traffic for a link or road described in a received TPEG message. The video data may include moving images and/or still images. In yet another example, the additional information component 420 may store data describing various places of interest, such as theatres or restaurants, associated with a link described in a TPEG message.

A language code representing basic language for a location reference component 324 is recorded (322) in the TPEG-location container 32 shown in FIG. 4 including location information corresponding to the congestion traffic status container shown in FIG. 4. The TPEG-location container 32 includes the location reference component 324 in which location coordinates are recorded.

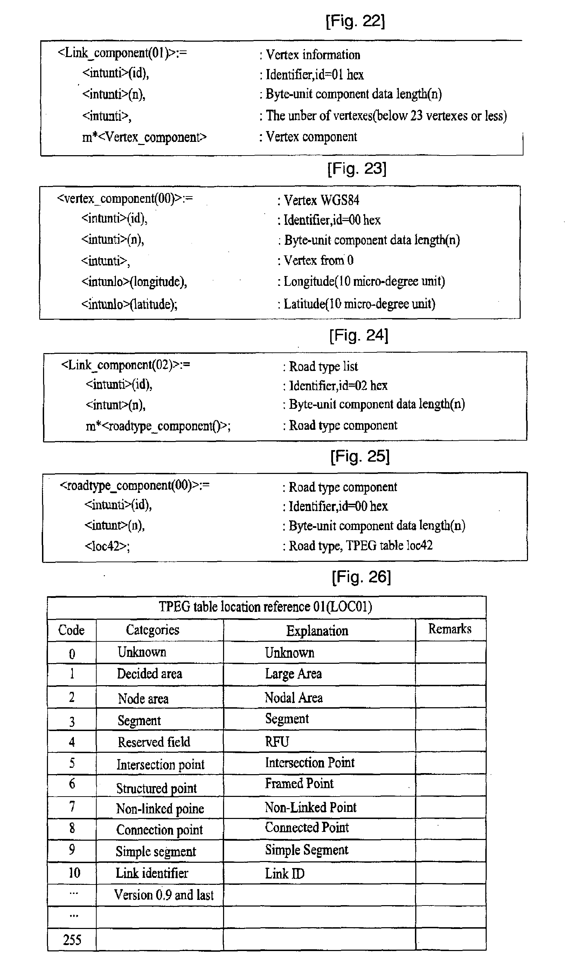

Information of "location type" 342 is recorded in the location reference component 324, and is represented by Link ID as shown in FIG. 26. A unique ID code is given to each link using Link ID so that information of road or link can be transmitted using the code, whereby data between transmission and reception can be reduced.

A mode type list 344 represents definition of a traffic means. For example, the code represents definition of a traffic means such as bus, ship, plane, and car.

The link identifier 346 defines a link system enabling a determination of a link location type of a particular link. For example, a link system of the link ID may be determined by comparing the link system identifier value with an entry in a link system look-up table. The entry in the link system look-up table may be indicative of a standard link system, such as an intelligent traffic system prescribed by Ministry of Construction & Transportation ("MCOT") of the Republic of Korea. In another example, the link identifier 346 may directly specify a standard link system. In addition, a descriptor 348 includes additional supplement data on an actual link, wherein examples of the additional supplement data include text data or audio/video data. In another example, the link identifier 346 may directly specify a standard link system.

The link identifier 346 includes a link ID component 362 associated with a particular link, such as a road. The link ID may be unique to a particular link. The link ID may be globally unique or unique within a predetermined geographic region. In one example, the link ID component 362 may be specified using code values prescribed by various communications standards, such as the Intelligent Traffic System standard. In another example, the link ID may include coordinates (e.g., latitude and longitude) of the links vertices. In yet another example, the link ID may be a character string, a number, or a combination of above, such as "0 K_Ave_3456_Atlanta_US."

Furthermore, the link identifier 346 includes information of a link vertex component 364. The link vertex component 364 identifies the type of vertices that are created by a link, so that the link can be more precisely depicted on a map. A higher number of vertices provide more accurate maps or directions. For example, if the link vertex component 364 includes 100 vertices, the map may be displayed in a VGA mode. On the other hand, if the link vertex component 364 includes 1000 vertices, the map may be displayed in a higher resolution, such as SVGA.

Finally, the link identifier component 346 includes a road type list component 366 that identifies the type of a road represented by the link.

An example of the descriptor 348 can include text or various audio/video data, wherein the text may be used name and additional description of link which is not defined on the link identifier. A code representing that a descriptor type 382 is a link identifier can be recorded to record name of link, and name or additional description of link can be recorded in the descriptor 384.

A structure of the congestion traffic status container is shown in FIG. 4 based on hierarchical connection between respective components constituting messages while syntaxes of a detailed structure of each component are shown in FIG. 5 to FIG. 13.

The "CTT component 80" transmits current CTT status information contained in the CTT status container of FIG. 3. For example, an ID "80hex" 402 may be assigned to the CTT component. The CTT component 80 includes at least one status component 406, for example, one or more (M) status components 406 (e.g., M number of status components). The CTT component 80 includes a byte-unit data length field 404 for indicating an overall data length of the status component in byte units. In particular, Table 1 shows some of the exemplarily variable types used to describe the exemplary structures for CTT components.

**Table 1**

| type | description |
|---|---|
| byte | 8 bit byte |
| intsili | 16 bit-integer signed little |
| intsilo | 32 bit-integer signed long |
| intsiti | 8 bit-integer signed tiny |
| intunli | 16 bit-integer unsigned little |
| intunlo | 32 bit-integer unsigned long |
| intunti | 8 bit-integer unsigned tiny |
| short string | a string |
| status component | a data structure that may include other data structures |
| m* | pointer to a data structure may indicate muliple components within |

Each status component may include at least one of the average link speed, the link travel time, the link delay time, and the congestion type, which are configured in the forms of syntaxes of FIG. 6 to FIG. 4E. Referring to FIG. 6, the status component ("status_component (00)") including the average link speed can be assigned with an ID "00 hex," and data of the speed defined in units of Km/h can be contained in the status component ("status_component (00)".

As shown in FIG. 7, a specific ID "01 hex" is assigned to the status component ("status_component(01)") equipped with link travel time information, and data of the link travel time may be defined in units of seconds (i.e., sec. units).

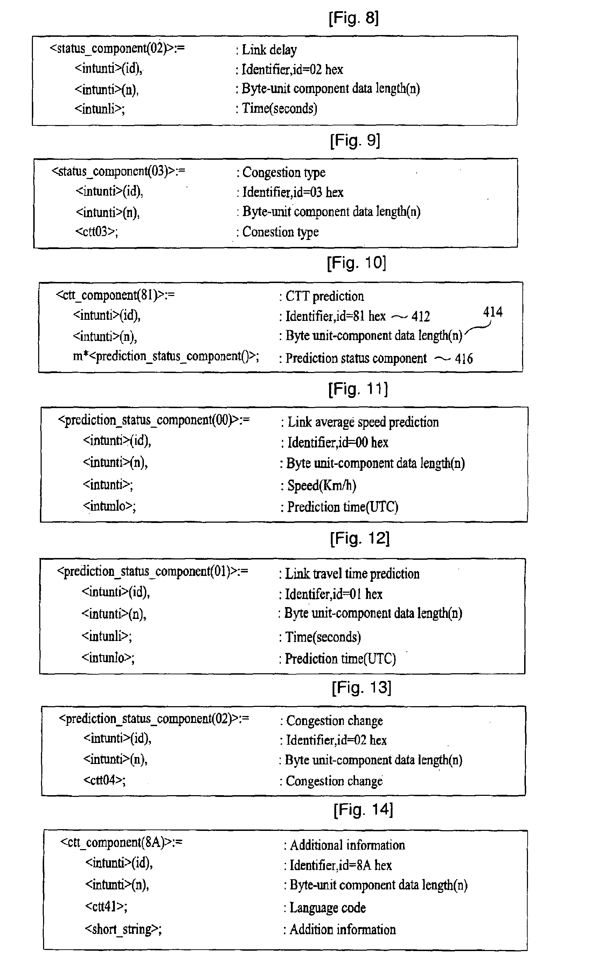

Referring to FIG. 8, a specific ID "02 hex" is assigned to the status component ("status_component(02)") equipped with the link delay time information, and data of the delay time based on links is defined in units of seconds.As shown in FIG. 4E, a specific ID "03 hex" is assigned to the status component ("status_component(03)") equipped with congestion type information, and congestion type data is recorded by codes defined in a CTT application table 03 (CTT 03) (table 2). For example, "ctt03_1" is recorded in case of smooth traffic, "ctt03_1," "ctt03_2" is recorded in case of slow traffic, "ctt03_3" is recorded in case of delay traffic, and "ctt03_4" is recorded in case of congested traffic.

**Table 2**

| code | CEN-English "word" | Comments | Example |
|---|---|---|---|
| 0 | Unknown | | |
| 1 | Non-congested | smooth | |
| 2 | crowded | slow | |
| 3 | cogested | Delay | |
| 4 | unmoving | Congested | |
| .... | | | |
| 255 | | | |

Referring to FIG. 10, the CTT component ("ctt_component(81)") for transmitting CTT prediction information is assigned with an ID "81 hex" 412, and includes at least one status component 416 (e.g., M number of prediction status components). The CTT component ("ctt_component(81)") includes a byte-unit data length field 414 for indicating an overall data length of the status component in byte units. Each status component includes the average link speed prediction, the link travel time prediction, the link delay time prediction, and/or the congestion change, which are configured in the forms of syntaxes of FIG. 11 to FIG. 13.

Referring to FIG. 11, the prediction status component ("prediction_status_component(00)") including the average link speed prediction is assigned with a specific ID "00 hex" and data of the speed defined in units of Km/h may be contained in the prediction status component ("prediction_status_component(00)").

As shown in FIG. 12, a specific ID "01 hex" is assigned to the prediction status component ("prediction_status_component(01)") equipped with link travel time prediction information. Data of the link travel time prediction may be defined in units of seconds (i.e., sec. units), and includes time information associated with a designated prediction time.

As shown in FIG. 13, a specific ID "02 hex" is assigned to the prediction status component ("prediction_status_component(02)") equipped with the congestion change information, and congestion change data may be recorded by codes defined in the CTT message table 04 (Table 3). For example, "ctt04_01" is recorded if the link speed increases more than before, "ctt04_2" is recorded if the link speed decreases less than before, and "ctt04_3" is recorded if the link speed is equal to before.

**Table 3**

| code | CEN-English"word" | Comments | Examples |
|---|---|---|---|
| 0 | Unknown | | |
| 1 | Drawing | | |
| 2 | Elininating | | |
| 3 | constant | | |
| 4 | | | |
| ... | | | |
| 255 | | | |

FIG. 14 illustrates a syntax of additional information contained in a status component according to the present invention. Referring to FIG. 14, a specific ID "8A hex" is assigned to the status component ("ctt_component(8A)") equipped with additional information. Additional information data contained in the CTT component ("ctt_component(8A)") includes CTT-associated additional information for each message and auxiliary information for each message. In this case, the CTT-associated additional information and the auxiliary information are configured in the form of text data.

For example, the congestion type component shown in FIG. 9 may represent the congestion type information using codes defined in the CTT table. However, if the above-mentioned congestion type information cannot be denoted by the codes defined in the CTT table, the congestion type component may use a status component equipped with additional information. As another example, the link speed change information contained in the prediction status component ("prediction_status_component(02)") equipped with the link speed change information of FIG. 13 can be represented by using codes defined in the CTT table. However, if the link speed change information cannot be represented by using only the codes defined in the table, an additional information component may be used for the above-mentioned situation.

In more detail, video data captured by a camera capable of capturing a traffic status for each link is contained in the additional information component, such that the additional information component equipped with the video data may be transmitted to a user or users. In this case, the video data may include moving images and still images. In yet another example, if a famous restaurant or a historical place or theater is contained in a specific link indicating the status information, information associated with the above-mentioned places may also be contained in the CTT component ("CTT_component(8A)").

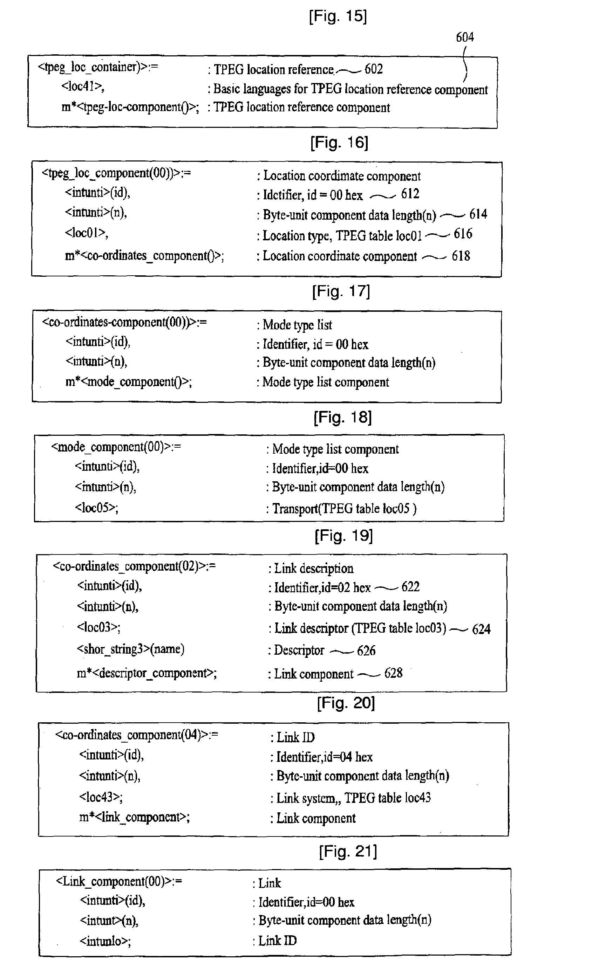

The TPEG location container of FIG. 3 hierarchically includes a plurality of components contained in the message. Detailed descriptions and syntaxes of individual components are depicted in FIG. 15 to FIG. 25.

Referring to FIG. 15, the TPEG location container (tpeg_loc_container) for indicating location information corresponding to the above-mentioned status information records basic languages for the TPEG location component (tpeg_loc_container) using the code 602 defined in the location reference table "loc41" (not shown). For example, in the case of the Korean language, data "loc41_65" is recorded in the TPEG location container. Also, the TPEG location container may include at least one TPEG location component (tpeg_loc_component) 604 (e.g., M number of TPEG location components).

Referring to FIG. 16, a specific ID "00 hex" 612 is assigned to the TPEG location component ("tpeg_location_ component(00)") equipped with the location coordinates. The TPEG location component ("tpeg_location_component(00)") includes a byte-unit data length field 614 for indicating a corresponding component data length in byte units. Also, the TPEG location component ("tpeg_loc_component(00)") includes a specific field 616 capable of indicating a location type using codes prescribed in the location reference table "loc01" (not shown), and also includes at least one coordinates component (co-ordinates_component) 618 (e.g., M number of coordinates components).

Referring to FIG. 17, the coordinates component ("co-ordinates_component(00)") equipped with mode-type information (i.e., transportation-type information) is assigned with a specific ID "00 hex" 612, and includes at least one mode-type component (mode_component) (e.g., M mode components).

As shown in FIG. 18, the mode-type component ("mode_component(00)") equipped with the mode-type information is assigned with a specific ID "00 hex" such that it indicates which one of transportation means is used by codes defined in the TPEG location reference table "loc05" For example, if a mode type is determined to be a train, the mode-type component indicates the value "loc05_2". If a mode type is determined to be a bus, the mode-type component indicates the value "loc05_6".

Referring to FIG. 19, the coordinates component ("co-ordinates_component(02)") equipped with link description is assigned with a specific ID "02 hex" 622, such that it indicates which one of descriptors is used by codes defined in the TPEG location reference table "bloc03" 624. For example, if the descriptor type indicates link description of road and relates to a link ID, the coordinates component 02 (co-ordinates_component 02) is represented by the value "loc03_44".

A coordinates component 02 (co-ordinates_component 02) equipped with link description includes at least one descriptor component (descriptor_component) 628 (e.g., M number of descriptor components). The coordinates component may record the link description in the form of short strings. In this case, the above-mentioned link description may be a link ID, or may be link-associated text description such as road names. If the link ID is written by the short strings, bytes are unnecessarily wasted. In order to solve the above-mentioned problems, the present invention includes the coordinates component equipped with the link ID based on a standard node or node system in the TPEG location component. Identifying the particular link from the received link information may include comparing the link identification value with an entry in a link identification look-up table. The particular link may be associated with a predetermined link identification value in the link identification look-up table. The link identification value may be unique to the particular link. Identifying the particular link from the received traffic information may further include storing an entry in the link identification look-up table.

Referring to FIG. 20, a specific ID "04 hex" is assigned to the coordinates component ("co-ordinates_component(04)") equipped with the link identifier (ID) information. The coordinates component ("co-ordinates_component(04)") indicates which one of links is used as the link ID by codes defined in the location reference table "loc43". For example, in the case of using a specific ID contained in the standard link system prescribed by Ministry Of Construction & Transportation (MOCT) of the Republic of Korea, the above-mentioned coordinates component 04 is denoted by "loc 43_1". At least one link component "link_component" (e.g., M number of link components) is contained in the coordinates component ("co-ordinates_component(04)"). The link component may include a link ID or a link vertex.

Referring to FIG. 21, a specific ID "00 hex" is assigned to the link component ("link_component(00)") equipped with predefined link ID data. The link component ("link_component(00)") includes predetermined link ID data defined in either the TPEG receiver or the TPEG server. For example, the link component ("link_component(00)") may use the link ID defined in the intelligent traffic system standard node link. In this case, the link ID information may indicate the coordinates component equipped with a single link ID, and may also indicate other coordinates components equipped with several link IDs or multiple link IDs.

Referring to FIG. 22, information associated with a vertex between links (hereinafter, referred to as link-vertex information) is recorded in a link component ("link_component (01)"). A specific ID "01 hex" is assigned to the link component ("link_component (01)". The link component ("link_component (01)") includes information associated with 23 vertexes or less. The coordinates component ("co-ordinates_component(02)") includes at least one vertex component (e.g., M number of vertex components) equipped with vertex data. In this case, the above-mentioned vertex allows a terminal for receiving traffic information to recognize either coordinates or a link shape designated by a link ID, such that the above-mentioned terminal can express the recognized coordinates or link shape in the form of graphic data using the vertex. The vertex is latitude/longitude information defined by the WGS84 (World Geodetic System 1984) format. However, it should be noted that the scope of the above-mentioned term "vertex" can also be applied to similar terms or other examples as necessary. The link system may be a vertex-based link system, where the link identification value is indicative of one or more vertices, and identifying the particular link from the received link information is further based upon the one or more vertices.

Referring to FIG. 23, a specific ID "00 hex" is assigned to a vertex component ("vertex_component(00)") for recording vertex information using the WGS84 format. The above-mentioned vertex component ("vertex_component(00)") includes latitude/longitude data designated by 10 micro-degree units. In this case, the latitude/longitude data starts from "0" such that it increases by 10 micro-degree units. The terminal for receiving traffic information, unequipped with an electronic map can more realistically display the road shape on the basis of the above-mentioned coordinates information on the screen. Therefore, the number of vertexes has a scale (e.g., a scale of 10000:1) lower than that of an electronic map stored in a disc. The vertex component (00) may include the number of vertexes to visually display a desired road on a VGA or QVGA. For example, the number of vertexes may be determined to be equal to or less than 23.

As shown in FIG. 24, a specific ID "02 hex" is assigned to the link component ("link_component(02)") equipped with road type information. The link component 02 includes at least one road type component ("roadtype_component") (e.g., M number of road type components). Referring to FIG. 25, a specific ID "00 hex" is assigned to the road type component ("roadtype_component(00)"), such that the road type component ("roadtype_component(00)") indicates whether a road is a national road (code loc42_1), a local road (code loc42_2), or an expressway (code loc42_3) by referring to the codes defined in the location reference table (loc42) (not shown). FIG. 26 to FIG. 28 show location reference tables according to the present invention.

The table of FIG. 26 is a TPEG location reference table 01 used for the TPEC location component ("tpeg_loc_component(00)") equipped with location type information of FIG. 16. The table of FIG. 26 defines specific information capable of indicating the location type information using codes. For example, if the location information is a node name, it is represented by the value "loc01_2". Provided that the location information is denoted by the link ID, it is represented by the value "loc01_10".

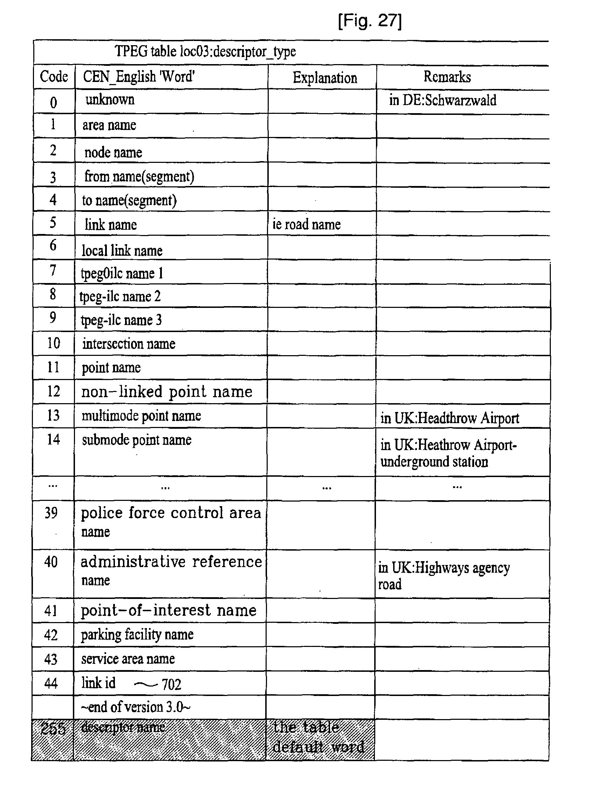

The table of FIG. 27 is a TPEG location reference table 03 used for the coordinates component ("co-ordinates_component(02)") equipped with location description of FIG. 19. The table of FIG. 27 defines location descriptor information using codes. For example, if the location descriptor is a node name, it is represented by the value "loc03_2." In order to indicate a specific case in which the location descriptor is a link ID, a specific code 44 (702) is added to the TPEG location reference table 03. Therefore, if the location descriptor is the link ID, it is represented by the value "low03_44."

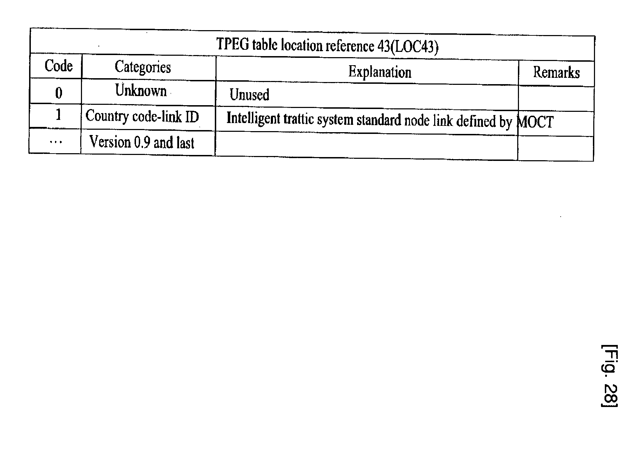

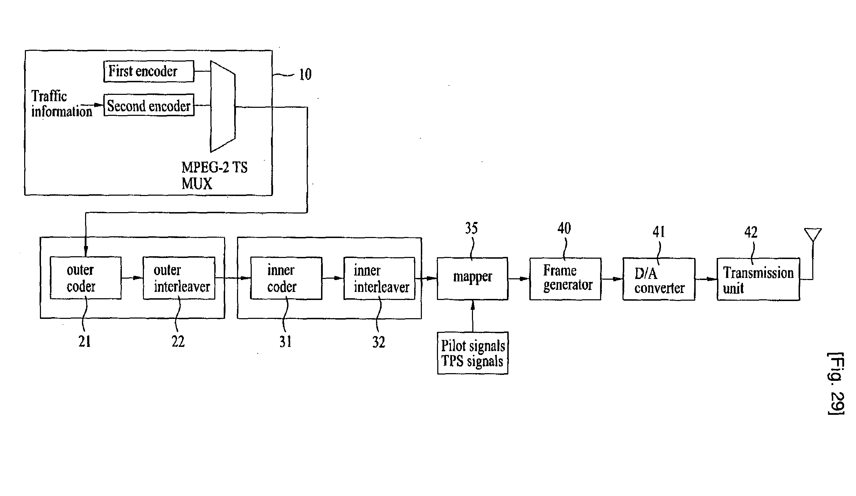

The table of FIG. 28 is a TPEG location reference table 43 used for the coordinates component ("co-ordinates_component(04)") equipped with the above-mentioned link ID of FIG. 20. The table of FIG. 28 defines the link ID category information using codes, such that it can indicate which one of link systems will be used as the link ID. For example, if the link ID system is the intelligent traffic system prescribed by Ministry Of Construction & Transportation (MOCT) of the Republic of Korea, it is represented by the value "loc43_1." If the above-mentioned traffic information is to be transmitted by the method and apparatus for transmitting and receiving traffic information according to the present invention, an example of transport signal types will be described below. The method for transmitting and receiving traffic information and the apparatus for transmitting and receiving traffic information according to the present invention can transmit and receive traffic information in the form of broadcasting signal such as digital video broadcasting terrestrial (DVB-T) or digital video broadcasting-handheld (DVB-H). FIG. 29 illustrates one example of an apparatus for transmitting traffic information. One example of the apparatus for transmitting traffic information will be described below.

Broadcasting signals, for example, audio/video signals are multiplexed by a multiplexer 10 in the format of MPEG-2 transport stream (TS) and then output. The above-mentioned traffic information may be multiplexed in the format of MPEG-2 TS along with the audio/video signals. For energy dispersal, the multiplexer 10 multiplexes MPEG-2 TS type signals including traffic information. An outer coder 21 and an outer interleaver 22 can respectively encode and interleave the multiplexed data to improve transmission performance of the multiplexed signals. For example, a Reed-Solomon code method may be used as an outer coding method while a convolution interleaving method may be used as an interleaving method.

An inner coder 31 and inner interleaver 32 encode transport signals and interleave the coded signals considering that any error may occur in the transport signals. The inner coder may code the transport signals in accordance with a punctured convolution code, and the inner interleaver may use a native or in-depth interleaving method in accordance with use of a memory in transmission modes of 2k, 4k and 8k.

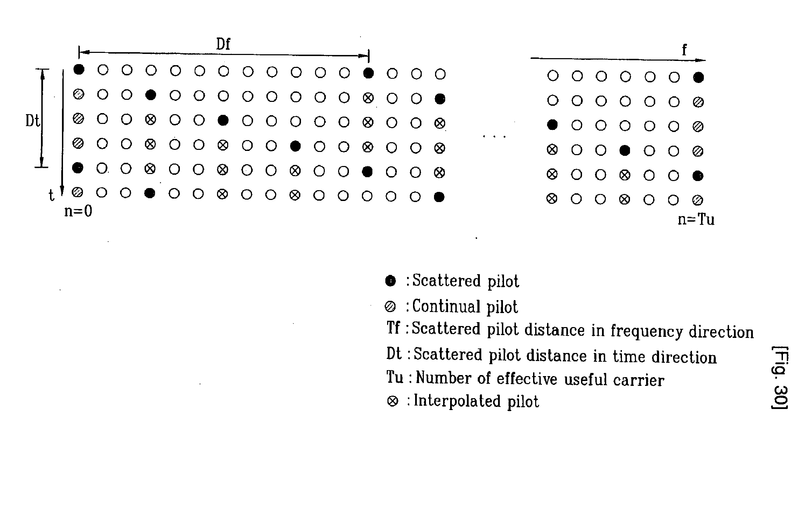

A mapper 35 can map the transport signals with symbols in accordance with modes such as 16QAM (quadrature amplitude modulation), 64QAM, and QPSK (quadrature phase shift keying), considering pilot of the transmission modes and transmission parameter signaling (TPS). A frame generator 40 modulates the mapped signals in an orthogonal frequency division multiplex (OFDM) scheme, and generates frames inserted with a guard interval in a data interval including the modulated signals. Each frame includes 68 OFDM symbols, wherein each symbol includes 6817 carriers in case of the mode of 8k while it includes 1705 carriers in case of the mode of 2k. The guard interval is a cyclic continuation copied from data in the data interval, and its length depends on the transmission modes. Each of the OFDM frames includes scatter pilot signals, continuation pilot signals, and TPS carriers. The structure of the frames generated from the frame generator of FIG. 29 will be described with reference to FIG. 30.

A digital-to-analog converter 41 converts digital type broadcasting signals having a guard interval and a data link into analog signals, and a transmission unit 42 can transmit the converted analog signals to RF signals. The digital-to-analog converter 41 and a transmission unit 42 may be in a united transmitter. The traffic information in the format of MPEG-2 TS can be transmitted in the form of DVB-T. In this case, the format of MPEG-2 TS may be transmitted in the form of packetized elementary stream (PES) or section.

FIG. 30 illustrates signal arrangement according to the frames which the frame generator generates in FIG. 29. In FIG. 30, Tu represents the number of available sub-carriers, Dt represents the distance between scatter pilots on a time axis, and Df represents the distance between scatter pilots on a frequency axis. The distance Df between the scatter pilots on the frequency area determines a delay range of a ghost signal, which can be predicted on a channel. Referring to FIG. 30, the location of pilots to be interpolated during reception of the signals generated by the frame generator, is shown.

Symbols are arranged to represent a uniform pilot pattern per four symbols, such that time interpolation can be executed in the location of the pilots during reception of the signals. In other words, a first input symbol (t=1) is arranged to represent the same scatter pilot signal as that of the fifth input symbol (t=5). Time interpolation of the symbols input at t=2, t=3 and t=4 can be executed in the location of the scatter pilot signals during reception of the signals.

Furthermore, the symbol input at t=6 has the same scatter pilot pattern as that of the symbol input at t=2, and time interpolation of the signals at t=3, t=4 and t=5 can be executed in the location of the scatter pilot signals of the symbols input at t=6 and t=2.

In this way, time interpolation is executed as above during reception of the signals after the symbol is input at t=7. In this case, since the scatter pilots are located for the symbol input at t=4 per four sub-carriers, the distance between the scatter pilot signals in the frequency area of the symbol input at t=4 is reduced in the range of 1/4 of the distance between the original scatter pilot signals, and the symbol input at t=4 has a pattern where the scatter pilot signals are located per four sub-carriers. Therefore, it is possible to obtain an advantage that more pilot signals are located in the symbol during reception of the signals. As a result, if a signal is transmitted using the continuation pilot signals and the scatter pilot signals, channel compensation can be made adaptively depending on the status of the channel received during the reception of the signal.

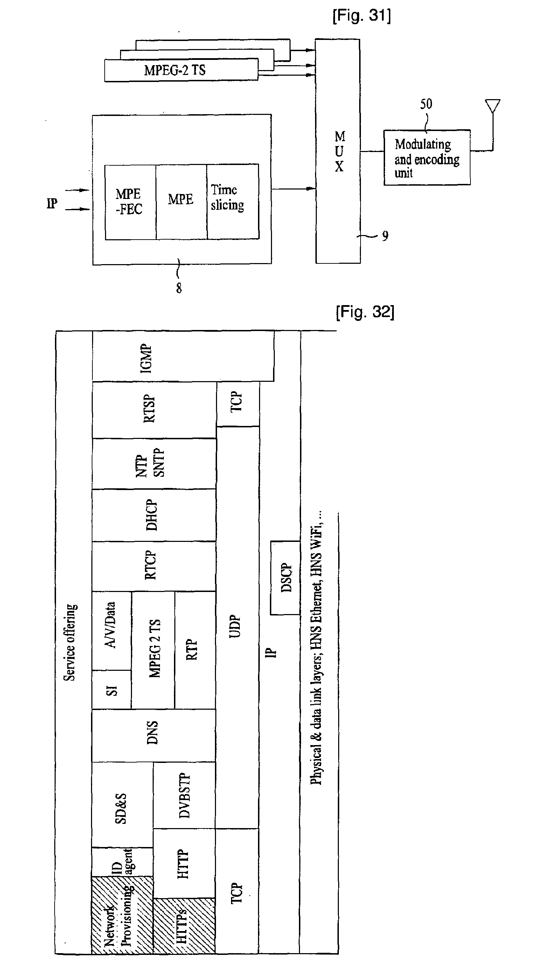

FIG. 31 illustrates another example of an apparatus for transmitting traffic information. Another example of the apparatus for transmitting traffic information will be described below with reference to FIG. 31.

As another example for transmitting the above-mentioned traffic information, a DVB-H mode can be used. The DVB-H mode enlarges a broadcasting area to a mobile terminal area, and can transmit transmission information using IP datagram. The IP datagram refers to a signal processing mode that allows a signal to be transmitted using a packet according to Internet protocol. The IP datagram includes a header including IP address, and a data container transmitting information. Video signals, audio signals, and traffic information signals can be transmitted to the data container of the IP datagram in packet units. In other words, the DVB-H mode uses internet protocol datacasting (IP datacasting) that allows the audio signals, the video signals, and the traffic information signals to be transmitted after being divided and compressed by packet units.

A signal converter 8 can convert the traffic information into data including IP by compressing the traffic information either along with the audio and video signals or separately in packet units. At this time, IP data is embedded in the MPEG-2 TS after being encapsulated by multi-protocol encapsulation (MPE). The MPE may be multi-protocol encapsulation-forward error correction (MPE-FEC) section data to which FEC is added. If a transmission signal is arranged by a form of MPE-FEC, a carrier-to-noise (CN) ratio of the transmission signal can be improved. Therefore, either MPE-FEC data having FEC or MPE data having no FEC can include transmission data in the format of IP data.

The IP datagram encapsulated by the signal converter 8 using MPE may be multiplexed by a time slicing mode to reduce power consumption, and is converted into a transport stream to multiplex with MPEG-2 TS equipped with the video or audio signals. A modulating and encoding unit 50 can include configuration blocks corresponding to reference numerals 21 to 42 of FIG. 29. The traffic information multiplexed by MPEG-2 TS can be transmitted as the broadcasting signals after undergoing modulating and encoding steps of the DVB-T broadcasting signals described with reference to FIG. 29.

FIG. 32 illustrates a diagram of protocol stack in which IP datagram of the traffic information will be followd, if the traffic information is transmitted in IP datagram. The top layer of this stack signifes the service offering intended by the traffic information provider. The Real-Time Streaming Protocol (RTSP) is used for control of the delivery of broadcast TV and audio programs as well as for on-demand delivery. Audio streams, video streams and traffic information (A/V/Data in fig. 32) and the stream pasrsing information of the streams are multiplexed into a valid MPEG-2 transport stream. The resulting MPEG-2 packets aer encapsulated in RTP. And, the encapsulated traffic information in RTP can be transmitted along with IP (internet protocol) datagram in fig. 31

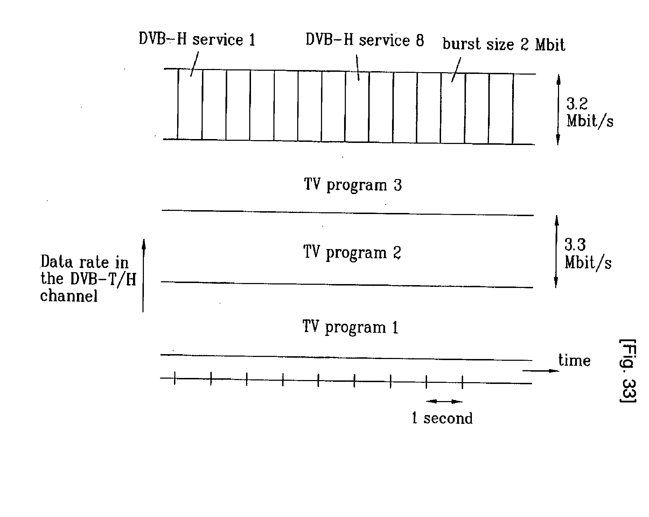

FIG. 33 illustrates an example of services transmitted on a channel, wherein the one service has a type slicing mode and is transmitted to DVB-H and the other service is transmitted to a common channel of DVB-T and DVB-H. A program can be transmitted in accordance with a channel of each of DVB-H and DVB-T, and each service can be multiplexed by time division through time slicing in case of DVB-H. The traffic information is included in the IP datagram by DVB-H and then converted to MPE or MPE-FEC, wherein the converted MPE or MPE-FEC can be transmitted to the embedded MPEG-2 TS.

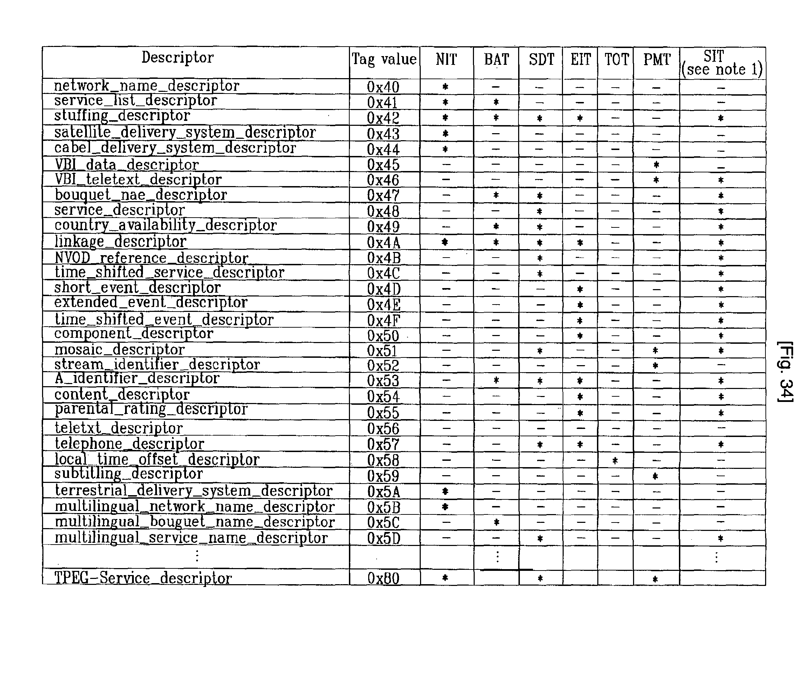

FIG. 34 illustrates location of a descriptor of traffic information that can be transmitted along with stream parsing information (i. e.; DVB-SI (DVB - service information or MPEG-2 TS program specific information) if the traffic information is transmitted through the encoding and modulating steps described with reference to FIG. 29 to FIG. 31. Hereinafter, stream parsing information means table information for parsing sections in broadcasting streams, for example, NIT and SDT in DVB-SI, PMT and PAT in MPEG-2 TS program specific information and so on. And, the descriptor of traffic information of traffic information in streams is called as descriptor table information .

The location of the descriptor table information of the traffic information according to an embodiment of the present invention will be described with reference to FIG. 34. Referring to FIG. 34, to facilitate description, descriptor table information of traffic information to be transmitted will be referred to as "TPEG service descriptor."

In a case that the traffic information transmitted by an embodiment of the present invention is transmitted through the broadcasting signals, stream parsing information for parsing the descriptor table information of traffic information is exemplarily shown in FIG. 34. The descriptor table information included in the broadcasting signals may be included in NIT (Network Information Table), BAT (Bouquet Association Table), SDT(Service Description Table), and EIT (Event Information Table), as shown in FIG. 34. The table of FIG. 34 represents that the descriptor for parsing the signal included in the broadcasting signal is included in which table of the transmission signals, wherein * represents that the descriptor is included in the table. For example, network_name_descriptor can be transmitted along with NIT. Therefore, if NIT of the broadcasting signals is parsed, it is possible to obtain a broadcasting signal transmitted depending on description of network_name_descriptor.

The TPEG service descriptor which describes descriptor table information of the traffic information according to an embodiment of the present invention can be located in at least one of NIT, SDT, and a program map table (PMT). The NIT corresponds to stream parsing information providing tuning information and transport stream group such as channel frequency. The SDT is used to transmit parameter and service name in the transport stream. The PMT transmits packet identifier (PID) information of video, audio, data, and program clock reference (PCR). If the TPEG service descriptor is transmitted along with the PMT, the PMT can be obtained by parsing a program association table (PAT) from the MPEG-2 TS. In FIG. 34, 0x80 is exemplarily shown as an identifier tag value of the TPEG service descriptor.

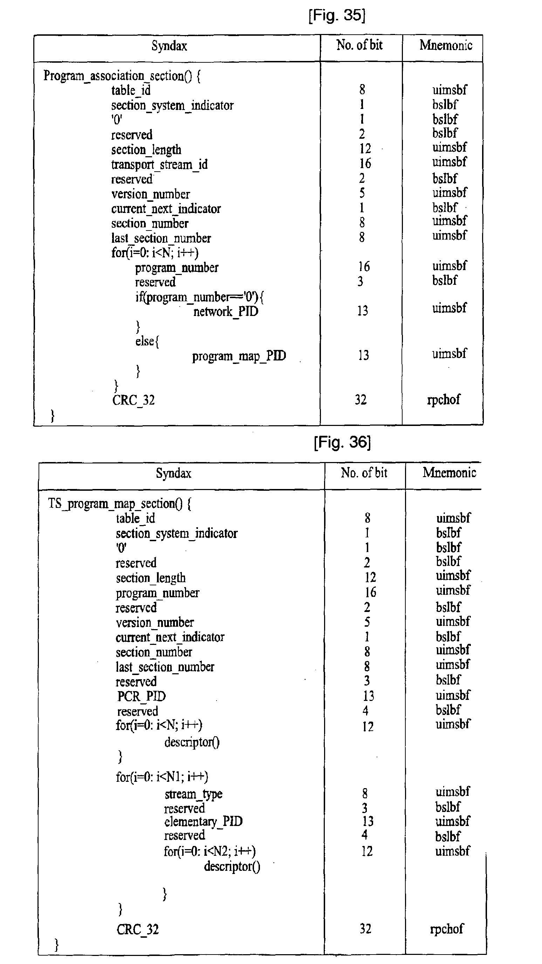

FIG. 35 and FIG. 36 respectively illustrate the PAT and the PMT as stream parsing information transmitted along with the MPEG-2 TS type signal. The PAT serves to assign a transport packet to each program using a packet having PID of 0. The PID of a packet transmitting the PMT can be obtained from the PAT (a), and the PID of the packet can be obtained from the PMT to identify information which the packet in the stream transmits (b).

Therefore, if the packet having the PID obtained from the PMT is searched, video, audio and traffic information included in the packet can be obtained.

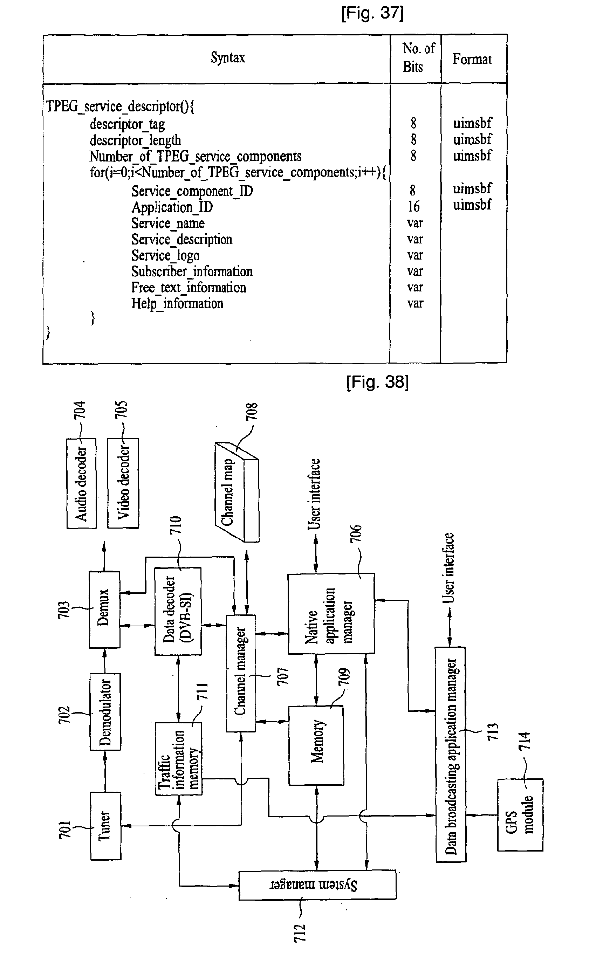

FIG. 37 illustrates descriptor table information that can parse traffic information. Referring to FIG. 37, the TPEG service descriptor that can be included in the PMT (i.e. can be parsed from the PMT) can parse the broadcasting signal including the traffic information as shown in FIG. 37.

First, the TPEG service descriptor includes a descriptor tag (Descriptor_tag) field, a descriptor length (Descritpor_length) field, a field of the number of service components (Number_of_TPEG_Service_Components) indicating the number of service components included in the traffic information descriptor, and a plurality of traffic information sets corresponding to a value of the Number_of TPEG_Service_Components field. Each traffic information set may include a service component identifier (Service_Component_ID) field, an application identifier (Application_ID) field, and an additional service information field.

The Descriptor_tag field is assigned with 8 bits and a value for identifying the descriptor table information of traffic information from another descriptor.

The Descriptor_tag field is assigned with 8 bits, and a length from the Descriptor_length field to the end of the descriptor is represented by byte units. The Service_component_ID (SCID) field is assigned with 8 bits, and indicates a value for identifying service component in one service. The SCID field value can be defined by a service provider.

The Application_ID field is assigned with 16 bits and a value for identifying each application. In other words, each traffic information application is assigned with an application identifier (AID). Whenever a new application is defined, a new AID is assigned to the traffic information application.

The additional service information field may include a service name (Service_name) field, a service description (Service_description) field, a service logo (Service_logo) field, a subscriber information (Subscriber_information) field, a free text information (Free_text_information) field, and a help information (Help_information) field. The length of each field in the additional service information field is variable, and is indicated by at least one format of text row, number, and graphic.

The Service_name field indicates service name of the traffic information, and allows a user to identify the service. For example, the Service_name field may transmit the traffic information including service name called "traffic information service of 'A' broadcasting station."

The Service_description field indicates detailed description of corresponding service, and is to describe service contents in more detail. For example, the Service_description field may transmit the traffic information including service description called "contour public traffic information of the metropolitan southern area."

The Service_logo field indicates service logo, and allows the user to identify service or the service provider. The service logo can be transmitted in the format of bitmap or other image.

The Subscriber_information field indicates subscriber information. For example, the Subscriber_information field may transmit the traffic information including billing and payment information for a restricted service component.

The Free_text_information field indicates additional information to be transmitted to the user. For example, the Free_text_information field may transmit the traffic information including interruption of service and cancellation of information. The Help_information field indicates help information to be referred to by the user. For example, the Help_information field may transmit the traffic information including Internet address and phone number.

FIG. 38 illustrates an example of an apparatus for receiving traffic information according to the present invention. The apparatus for receiving traffic information according to an embodiment of the present invention will be described with reference to FIG. 38. The apparatus for receiving traffic information, as shown in FIG. 38, includes a tuner 701, a demodulator 702, a demultiplexer 703, an audio decoder 704, a video decoder 705, a data decoder 710, and a traffic information memory 711.

The tuner 701 tunes a frequency of a specific channel through any one of antenna, cable and satellite, and outputs a signal down-converted into an immediate frequency (IF) signal to the demodulator 702. Examples of signals received at the frequency of the specific channel include audio signals, video signals, traffic information signals, and stream parsing information of traffic information transmiited according to DVB-T/H. A channel manager 707 requests stream parsing information of traffic information by referring to channel information stored in a channel map 708, and receives the result from the data decoder 710. The channel manager 707 can control channel tuning of the tuner 701, and may be embodied by a software module.

The demodulator 702 demodulates a signal output from the tuner 701, and the demultiplexer 703 divides the signals including the video signals, audio signals and the traffic information and outputs the signals in TS packet units.

The demultiplexer 703 outputs TS packets including the traffic information to the data decoder 710. The data decoder 710 can decode the TS packets including descriptor table information of traffic information. In FIG. 38, it is supposed that the traffic information is to be transmitted in the form of digital storage media-command and control (DSM-CC) section of payload of the TS packets.

For example, the data decoder 710 can parse the descriptor table information of traffic information included in the PMT. The data decoder 710 parses the traffic information from the DSM-CC (Digital Storage Media Command and Control) section including the traffic information and stores the parsed information in the traffic information memory 711. The data decoder 710 forms a section table information by collecting sections having the same table identifier (table_id). The data decoder 710 can store the descriptor table information of traffic information and the traffic information message in the traffic information memory 711. If the data decoder 710 parses the descriptor of traffic information (e.g. TPEG-Service descriptor) from the stream parsing information, application identification information of the traffic information message transmitted to a corresponding channel, service component identification information, and additional service information (for example, service name, service description, service logo, subscriber information, free text information, and help information) can be obtained.

A first application manager 706 shown in FIG. 38 drives a native application program stored in a memory 709 to execute a general function such as channel conversion. In this case, the native application program means built-in type software built in the apparatus for receiving traffic information at the time when the apparatus is manufactured. If there is a user request to the apparatus for receiving traffic information through a user interface (UI), the first application manager 706 responds to the user request by displaying the native application program using a graphic user interface (GUI) on a screen. The user interface receives the user request through an input device such as a remote controller, a jog dial, and a touch screen on the screen, and outputs the user request to the first application manager 706, a data broadcasting application manager 713 and the like. The first application manager 706 manages channel related operation, for example the first application manager 706 manages the channel map 708 by controlling the channel manager 707, and controls the data decoder 710. Also, the first application manager 706 stores and restores the status of the receiving system, the user request and the GUI control of the overall receiving system in the memory 709.

If the data service is requested from the user interface, the data broadcasting application manager 713 drives the corresponding application program stored in the memory 709 to process the requested data and provides the data service to the user. For the data service, the data broadcasting application manager 713 supports the GUI. In this case, the data service is provided in the form of text, voice, graphic, still images, and moving images.

The data broadcasting application manager 713 may be software or hardware platform for executing the application program stored in the memory 709. In this case, the platform may be, for example, a Java virtual machine for executing Java program. The data broadcasting application manager 713 executes the traffic information application program stored in the memory 709 to process the traffic information message stored in the traffic information memory 711 and provides the traffic information service.

In the embodiment of the present invention, the traffic information service can be provided from an apparatus having no either of an electronic map and GPS (global positioning system) or both of them to the users through at least one of text, voice, graphic, still images and moving images. If a GPS module 714 is provided in the apparatus shown in FIG. 37, the GPS module 714 receives satellite signals transmitted from a plurality of low orbit satellites and extracts current location information (e.g., latitude, longitude, and altitude) so as to output current location information to the data broadcasting application manager 713. In this case, the electronic map and various kinds of graphic information including information of each link and node of road may be stored in the traffic information memory 711, the memory 709, or other memory (not shown). The data broadcasting application manager 713 can provide the traffic information service requested by the user based on the current location obtained through the GPS module 714 and the traffic information message stored in the traffic information memory 711 by executing the traffic information application program.

The traffic information message stored in the traffic information memory 711 is read out and input to the data broadcasting application manager 713 in accordance with the request of the data broadcasting application manager 713. The data broadcasting application manager 713 can analyze the traffic information message read out from the traffic information memory 711 to extract control signals and/or required information according to the message. To facilitate description, it is supposed that the user requests the service of the congestion traffic status.

The data broadcasting application manager 713 extracts message identification information, message occurrence time and message transmission time in the message management container 102 of the traffic information message and identifies from the message identification information whether a following container is the CTT-status container. In this case, message identifier and version number are included in the 'message component' information. The message identifier and version number may be included in every message and are used to manage the traffic information message of the data broadcasting application manager 713.

If the following container is the CTT-status container 104, information from the CTT component in the CTT status container 104 is obtained so as to execute the display operation according to traffic status information and prediction information of the traffic status. Also, location information corresponding to the current traffic information is obtained from the following location container 106.

In this case, the location information corresponds to location coordinates (latitude and longitude) of start and end points depending on location types or link ID assigned to link. A link corresponding to received information is specified according to information of each link and node stored in the traffic information memory 711 if necessary. Also, location coordinates of the received link may be used as link ID or inversely, the link ID may be used as the location coordinates. According to the embodiment of the present invention, if the location type information is link ID and the location information is text information such as road name related to link ID or link, a link corresponding to the received traffic status information can be specified in accordance with information of the corresponding link. Otherwise, if the location information is link ID or is a code having a defined link ID, a link corresponding to the received traffic status information can be specified in accordance with the link system stored in the traffic information memory 711.

Meanwhile, the data broadcasting application manager 713 reads out an electronic map from the traffic information memory 711 around current location coordinates received from the GPS module 714 and displays the read electronic map on the screen. In this case, a specific graphic symbol may be displayed on a point corresponding to the current location. The data broadcasting application manager 713 allows the average link speed information received through the traffic information message to be displayed on the link corresponding to link ID or the location coordinates. In this case, color may be displayed on the average link speed (for example, in general road, red color represents speed per hour of 0~1 0km, orange color 10-20km, green color 20~40km, and blue color 40km or more). Alternatively, the average link speed may be displayed on a corresponding link as a number. If the congestion change information extracted from the traffic information message has a value of 1 or 2, text row ('increase or decrease') or an icon assigned to the value may be displayed on the corresponding link together. If the congestion change information extracted from the traffic information message has a value of 0 or 3, the displayed status is maintained without being updated. If the congestion change information is a change rate of the average link speed, the average link speed may be displayed on the screen in accordance with a request from the user. This is to reduce visual confusion of a driver due to the display. An established traveling route or front route may be displayed within the limits of possible.

If there is no traffic information memory 711 or other memory having an electronic map in the apparatus for receiving traffic information, the average link speed is displayed for only link at the front of the current traveling route as color or number. If a traveling route is set in a vehicle provided with the apparatus for receiving traffic information, the average link speed may be displayed for links included in the traveling route not the links at the front.

Furthermore, if information added to the traffic information message is information of a famous restaurant or a theater in a specific link, the data broadcasting application manager 713 may allow the information to be displayed to identify a corresponding place on a link displayed on the screen and may allow the corresponding information to be displayed on the screen as text.

The data broadcasting application manager 713 may allow the information of link travel time, link delay, and congestion type extracted from the traffic information message to be displayed on the screen together with or instead of the average link speed in accordance with the request of the user. If the user designates prediction time to request prediction information of the traffic status of the road, the data broadcasting application manager 713 may display average speed prediction of each link received in the traffic information message as color or number instead of the current average speed. If the user requests a prediction travel time mode as a display mode instead of the average prediction speed, the data broadcasting application manager 713 displays the prediction travel time information of each link on the electronic map or graphic screen.

If a route automatic search function of a destination is set in the apparatus for receiving traffic information shown in FIG. 38, a desirable route can be searched or researched based on the received average link speed prediction or the link travel time prediction. For example, for each link following a node to be arrived after 30 minutes at the current traveling speed, a link corresponding to the shortest time to the destination set using the average prediction speed or link prediction pass time after 30 minutes may be selected as a traveling route and displayed on the screen. If the apparatus for receiving traffic information shown in FIG. 38 includes an audio output means, the traffic status information or the traffic status prediction information may be output to the designated link through audio.

The information and/or control signal extracted from the traffic information message may be used in the data broadcasting application manager 713 after being temporarily stored in a nonvolatile memory (not shown) such as a writable RAM. The data broadcasting application manager 713 stores information within a predetermined time, for example, information within last one hour, i.e., average speed or link pass time per 20 minutes (fixed hour, fixed hour:20 minutes, and fixed hour:40 minutes) without removing information of the nonvolatile memory after using the information of the nonvolatile memory. A memory interval storing the last hour may be increased or may be shortened depending on memory capacity. If the average speed provided for each link is stored and the user selects a specific link, the data broadcasting application manager 713 displays average speed history, link pass time history, average link prediction speed, or prediction link pass time, which is stored for the link, on the screen in the form of graph. In this case, a numeral value displayed in the graph includes km/h corresponding to speed information, and name of the current link, for example, road name is displayed on the top of the graph.

The name of the link according to an embodiment of the present invention includes link ID or road name, and is recorded in the link component or the location coordinate component included in the above-mentioned location container. Alternatively, the name of the link is included in the electronic map inside the second memory 711. In addition, the current and previous traffic information and prediction information may be displayed by various methods.

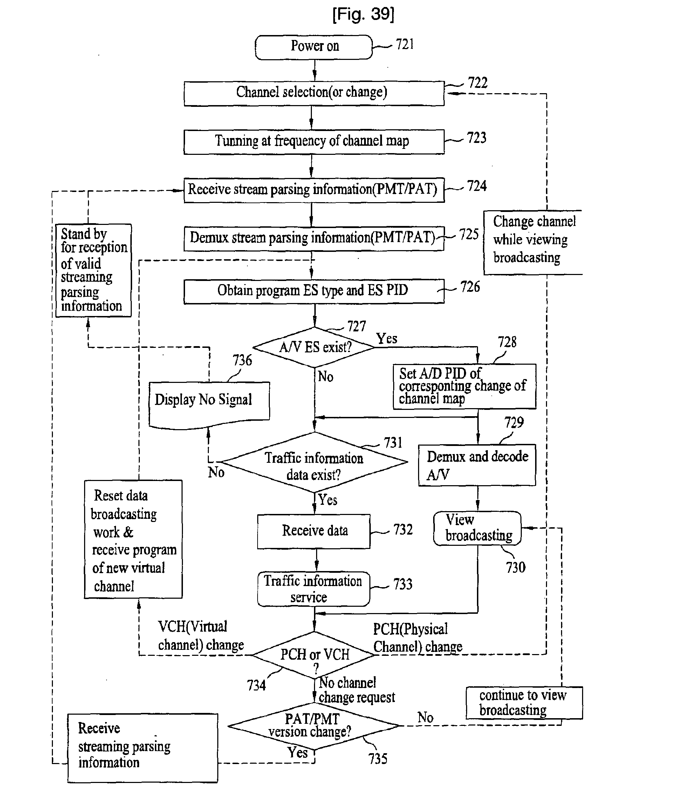

FIG. 39 is a flow chart illustrating a method for receiving traffic information according to an embodiment of the present invention. The method for receiving traffic information according to an embodiment of the present invention will be described below with reference to FIG. 39. In FIG. 39, an example of receiving the traffic information from the broadcasting signals if the traffic information is included in DVB-T/H will be described.

In a state that the apparatus for receiving traffic information is turned on (step 721), if channel selection or channel change is input (step 722), the channel is tuned at a physical frequency corresponding to the selected or changed channel by using a channel map (step 723).

The broadcasting signal data can be received at the frequency of the tuned channel, wherein the traffic information message and stream parsing information of the traffic information according to the DVB-T/H broadcasting signals are multiplexed. The demultiplexer 703 can demultiplex the traffic information message using the stream parsing information, for example PAT (program association table)/PMT (program map table) which is program information of MPEG-2 TS, PID detection and section filtering (step 725).

If descriptor parsing information of the traffic information which is parsed from the stream parsing information, is parsed, application ID and service component ID, which are related to the traffic information, can be obtained. If the stream parsing information is parsed, ES type and ES PID (elementary stream packet identifier) are obtained.

Information of a virtual channel, are extracted from the stream parsing information of traffic information by refering to the stream type (ES type) and PID of stream packet(step 726). In this case, if A/V ES (elementary stream) for broadcasting output exists in the virtual channel (step 727), A/V PID of the corresponding virtual channel (VCH) of the channel map is set (step 728) so that A/V demultiplexing and decoding are executed (step 729). The user can view broadcasting corresponding to the A/V (step 730).

Meanwhile, if the A/V ES for broadcasting output does not exist in the virtual channel in the step 727, it is checked whether the traffic information data is transmitted to the virtual channel (step 731). The presence of the traffic information data can be obtained from application ID, and service component ID, which are related to the traffic information, if the descriptor table information of traffic information is parsed. Supposing that the traffic information data is transmitted to the DSM-CC section, all the traffic information data corresponding to DSM-CC data format are received using PID of ES obtained from the PMT (step 732), and the user s desired traffic information service is provided (step 733).

If it is checked that neither A/V ES nor traffic information data exist in the virtual channel in the step 731, it is determined that the virtual channel is an invalid channel. In this case, a message indicating that a valid channel or signal does not exist may be displayed on a screen (step 736). The current step returns to the step 724 to newly receive a valid program information table.

Meanwhile, it is checked whether channel change is requested during data service or broadcasting viewing (step 734). If channel change is requested and the requested channel change is virtual channel change, the data broadcasting work is reset, and the current step returns to the step 726 to search new virtual channel information. Also, if the requested channel change is physical channel change, the current step returns to the step 723 to tune the corresponding physical channel.

If no channel change is requested, it is checked whether the streaming table information version such as PAT and PMT is updated (step 735). If it is checked that the streaming table information version is updated in the step 735, it means that channel information from the broadcasting station has been changed. Therefore, the current step returns to the step 724 to receive the channel information table again. If it is checked that there is no channel information change in the step 735, the user can continue to view broadcasting.

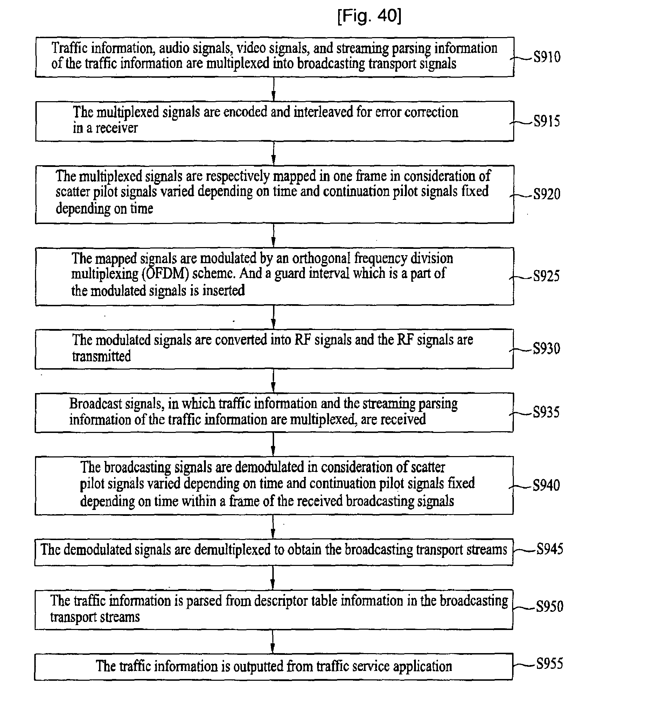

FIG. 40 is a flow chart illustrating a method for transmitting and receiving traffic information according to an embodiment of the present invention.

First, in cast of transmitting traffic information, traffic information, audio signals, video signals, and streaming table information are multiplexed into broadcasting transport signals (S910).

The multiplexed signals are encoded and interleaved for error correction in a receiver (S915).

The signals are respectively mapped in one frame in consideration of scatter pilot signals varied depending on time and continuation pilot signals fixed depending on time (S920).

The mapped signals are modulated by an orthogonal frequency division multiplexing (OFDM) scheme. And a guard interval which is a part of the modulated signals is inserted (S925).

The modulated signals are converted RF signals and the RF signals are transmitted (S930).

In case of receiving the traffic information, broadcast signals, in which traffic information and the descriptor table information of the traffic information are multiplexed, are received (S935).

The broadcasting signals are demodulated in consideration of scatter pilot signals varied depending on time and continuation pilot signals fixed depending on time within a frame of the received broadcasting signals (S940).

The demodulated signals are demultiplexed to obtain data broadcasting transport streams (S945).

The traffic information is parsed from descriptor table information in the data broadcasting transport streams (S950).

The traffic information is outputted from traffic service application (S955).

According to the present invention, various kinds of traffic information can be transmitted using the broadcasting signals in the format of DVB-H or DVB-T. In particular, the congestion and travel time information can be transmitted using DVB-H or DVB-T. In the method and apparatus for receiving traffic information according to embodiments of the present invention, the traffic information can efficiently be transmitted to the mobile terminal.

Also, in the method and apparatus for receiving traffic information according to embodiments of the present invention, the congestion and travel time information of the traffic link can be provided.

It will be apparent to those skilled in the art that various modifications and variations can be made in the present invention without departing from the scope of the invention. Thus, it is intended that the present invention covers the modifications and variations of this invention provided they come within the scope of the appended claims and their equivalents.

### Mode for the Invention

Various embodiments of the present invention are explained together with the aforesaid embodiments of the best mode.

### Industrial Applicability

It will be apparent to those skilled in the art that preferred embodiments of the present invention are exemplary only and various improvements, variations, alternations or additions of the embodiment can be made in the present invention without departing from the scope of the invention as defined in the appended claims. For example, providing traffic information like congestion and travel time information is applicable to various fields and products. It is also possible to provide a mobile terminal to which at least one feature of the present invention is applied.

## Claims

1. A method for transmitting traffic information, the method comprising:
multiplexing traffic information, audio signals, video signals, and stream parsing information into broadcasting transport signals, wherein the traffic information include
- information corresponding to an average speed for a road;
- a language code information which is indicative of the language used;
- a first location information corresponding to a location associated with the road; and
- a second location information including a latitude and a longitude information of a
position within the road;
encoding the multiplexed signals against error and interleaving the encoded signals;
mapping respectively, scatter pilot signals varied depending on time and continuation pilot signals fixed depending on time within one frame of the interleaved signals;
modulating the mapped signals by an orthogonal frequency division multiplexing scheme and inserting a guard interval to a frame of the modulated signals, the guard interval being a part of the modulated signals; and
converting the signals to which the guard interval is inserted, to radio frequency signals and transmitting the converted signals.

2. The method of claim 1, wherein the stream parsing information in the multiplexing step is a program map table.

3. The method of claim 1 or 2, wherein the traffic information includes identifier information of the average speed for the road, information indicating component data length of the average speed for the road, and speed information of the average speed for the road.

4. The method of claim 1 to 3, wherein the average speed for the road in the multiplexing step is a predicted average speed for the road.

5. An apparatus for transmitting traffic information, comprising:
a multiplexer multiplexing audio signals, video signals, data signals including traffic information, and stream parsing information parsing descriptor table information of the traffic information into broadcasting transport signals, wherein the traffic information include
- information corresponding to an average speed for a road;
- a language code information which is indicative of the language used;
- a second location information including a latitude and a longitude information of a position within the road; and
- a first location information corresponding to a location associated with the road;
an encoder encoding the multiplexed signals against error and interleaving the encoded signals;
a mapper mapping scatter pilot signals varied depending on time and continuation pilot signals fixed depending on time within one frame of the signals encoded by the encoder;
a frame generator modulating the mapped signals by the mapper by an orthogonal frequency division multiplexing scheme and inserting a guard interval to the frame of the modulated signals, the guard interval being a part of the modulated signals; and
a transmitter converting the signals to which the guard interval is inserted to radio frequency signals and transmitting the converted radio frequency signals.

6. The apparatus of claim 5, wherein the traffic information includes identifier information of the average speed for the road, information indicating component data length of the average speed for the road, and speed information of the average speed for the road.

7. The apparatus of claim 5, wherein the traffic information multiplexed by the multiplexer includes at least one of name of traffic information service, description of the traffic information service, logo information of the service, subscriber information of the service, free text information, and help information to be referred to by a user.

8. An apparatus for receiving traffic information, comprising:
a tuner receiving broadcasting signals including traffic information and stream parsing information of traffic information, wherein the traffic information include
- information corresponding to an average speed for a road;
- a language code information which is indicative of the language used;
- a second location information including a latitude and a longitude information of a position within the road; and
- a first location information corresponding to a location associated with the road;
a demodulator demodulating the broadcasting signals considering pilot signals varied depending on time and pilot signals fixed depending on time within a frame of the broadcasting signals received by the tuner;
a demultiplexer demultiplexing data signals including the traffic information and the stream parsing information of the traffic information among the demodulated signals;
a data decoder outputting the traffic information from the data signals and parsing the stream parsing information output from the demultiplexer;
a traffic information memory storing the traffic information output from the data decoder; and
a data broadcasting application manager outputting the traffic information stored in the traffic information memory using a broadcasting application.

9. The apparatus as claimed in claim 8, wherein the traffic information includes identifier information of the average speed for the road, information indicating component data length of the average speed for the road, and speed information of the average speed for the road.

10. The apparatus as claimed in claim 8, wherein the stream parsing information is a program map table.

11. A method for receiving traffic information, comprising:
receiving broadcasting signals obtained by multiplexing traffic information and stream parsing information for parsing the traffic information in to broadcasting transport streams, wherein the traffic information include:
- information corresponding to an average speed for a road;
- a language code information which is indicative of the language used;
- a second location information including a latitude and a longitude information of a position within the road; and
- a first location information corresponding to a location associated with the road;
demodulating the broadcasting signals considering scatter pilot signals varied depending on time and continuation pilot signals fixed depending on time within a frame of the received broadcasting signals;
decoding the demodulated signals to obtain the broadcasting transport streams;
parsing the traffic information using descriptor table information among the broadcasting transport streams; and
outputting traffic information service using the traffic information.

12. The method as claimed in claim 11, wherein the traffic information includes identifier information of the average speed for the road, information indicating component data length of the average speed for the road, and speed information of the average speed for the road.

13. The method as claimed in claim 11, wherein the traffic information includes at least one of name information of the traffic information service, description information of the traffic information service, logo information of the service, subscriber information of the service, additional information of the service, and help information to be referred to by a user.

14. The method as claimed in claim 11, wherein the stream parsing information is a program map table.

15. The method of claim 11 to 14, wherein the average speed for the road in the multiplexing step is a predicted average speed for the road.

## Patentansprüche

1. Verfahren zum Senden von Verkehrsinformationen, wobei das Verfahren Folgendes umfasst:
Multiplexieren von Verkehrsinformationen, Audiosignalen, Videosignalen und Streamanalyse-Informationen zu Rundfunktransportsignalen, wobei die Verkehrsinformationen Folgendes enthalten
- Informationen, die einer Durchschnittsgeschwindigkeit für eine Straße entsprechen;
- eine Sprachcode-Information, welche die verwendete Sprache anzeigt;
- eine erste Standortinformation, die einem der Straße zugeordneten Standort entspricht; und
- eine zweite Standortinformation, die eine Breitengrad- und eine Längengradinformation einer Position auf der Straße enthält;
Codieren der multiplexierten Signale gegen Fehler und Ineinanderschachteln der codierten Signale;
Abbilden von zeitabhängig veränderten Streupilotsignalen bzw. zeitabhängig fixierten Fortsetzungspilotsignalen innerhalb eines einzelnen Frames der ineinander verschachtelten Signale;
Modulieren der abgebildeten Signale durch ein orthogonales Frequenzmultiplexregime und Einfügen eines Schutzintervalls in einen Frame der modulierten Signale, wobei das Schutzintervall ein Teil der modulierten Signale ist; und
Umwandeln der Signale, in die das Schutzintervall eingefügt wurde, in Radiofrequenzsignale und Senden der umgewandelten Signale.

2. Verfahren gemäß Anspruch 1, wobei die Streamanalyse-Informationen in dem Multiplexierungsschritt eine Programmabbildungstabelle sind.

3. Verfahren gemäß Anspruch 1 oder 2, wobei die Verkehrsinformationen Identifikatorinformationen der Durchschnittsgeschwindigkeit für die Straße, Informationen, die eine Komponentendatenlänge der Durchschnittsgeschwindigkeit für die Straße anzeigen, und Geschwindigkeitsinformationen der Durchschnittsgeschwindigkeit für die Straße enthalten.

4. Verfahren gemäß Anspruch 1 bis 3, wobei die Durchschnittsgeschwindigkeit für die Straße in dem Multiplexierungsschritt eine vorhergesagte Durchschnittsgeschwindigkeit für die Straße ist.

5. Vorrichtung zum Senden von Verkehrsinformationen, die Folgendes umfasst:
einen Multiplexer, der Audiosignale, Videosignale, Datensignale, die Verkehrsinformationen enthalten, und
Streamanalyse-Informationen, die Deskriptortabelleninformationen der Verkehrsinformationen analysieren, zu Rundfunktransportsignalen multiplexiert, wobei die Verkehrsinformationen Folgendes enthalten:
- Informationen, die einer Durchschnittsgeschwindigkeit für eine Straße entsprechen;
- eine Sprachcode-Information, welche die verwendete Sprache anzeigt;
- eine zweite Standortinformation, die eine Breitengrad- und eine Längengradinformation einer Position auf der Straße enthält; und
- eine erste Standortinformation, die einem der Straße zugeordneten Standort entspricht;
einen Codierer, der die multiplexierten Signale gegen Fehler codiert und die codierten Signale ineinanderschachtelt;
eine Abbildungsvorrichtung, die zeitabhängig veränderte Streupilotsignale und zeitabhängig fixierte Fortsetzungspilotsignale innerhalb eines einzelnen Frames der durch den Codierer codierten Signale abbildet;
einen Framegenerator, der die durch die Abbildungsvorrichtung abgebildeten Signale durch ein orthogonales Frequenzmultiplexregime moduliert und ein Schutzintervall in den Frame der modulierten Signale einfügt, wobei das Schutzintervall ein Teil der modulierten Signale ist; und
einen Sender, der die Signale, in das Schutzintervall eingesetzt wurde, in Radiofrequenzsignale umwandelt und die umgewandelten Radiofrequenzsignale sendet.

6. Vorrichtung gemäß Anspruch 5, wobei die Verkehrsinformationen Identifikatorinformationen der Durchschnittsgeschwindigkeit für die Straße, Informationen, die eine Komponentendatenlänge der Durchschnittsgeschwindigkeit für die Straße anzeigen, und Geschwindigkeitsinformationen der Durchschnittsgeschwindigkeit für die Straße enthalten.

7. Vorrichtung gemäß Anspruch 5, wobei die durch den Multiplexer multiplexierten Verkehrsinformationen den Namen eines Verkehrsinformationsdienstes und/oder eine Beschreibung des Verkehrsinformationsdienstes und/oder Logo-Informationen des Dienstes und/oder Abonnenten-Informationen des Dienstes und/oder freie Textinformationen und/oder Hilfe-Informationen, auf die ein Nutzer zurückgreifen kann, enthalten.

8. Vorrichtung zum Empfangen von Verkehrsinformationen, die Folgendes umfasst:
einen Tuner, der Rundfunksignale empfängt, die Verkehrsinformationen und Streamanalyse-Informationen von Verkehrsinformationen enthalten, wobei die Verkehrsinformationen Folgendes enthalten:
- Informationen, die einer Durchschnittsgeschwindigkeit für eine Straße entsprechen;
- eine Sprachcode-Information, welche die verwendete Sprache anzeigt;
- eine zweite Standortinformation, die eine Breitengrad- und eine Längengradinformation einer Position auf der Straße enthält; und
- eine erste Standortinformation, die einem der Straße zugeordneten Standort entspricht;
einen Demodulator, der die Rundfunksignale unter Berücksichtigung von zeitabhängig veränderten Pilotsignalen und zeitabhängig fixierten Pilotsignalen innerhalb eines Frames der durch den Tuner empfangenen Rundfunksignale demoduliert;
einen Demultiplexer, der Datensignale, welche die Verkehrsinformationen und die Streamanalyse-Informationen der Verkehrsinformationen enthalten, unter den demodulierten Signalen demultiplexiert;
einen Datendecodierer, der die Verkehrsinformationen aus den Datensignalen ausgibt und die von dem Demultiplexer ausgegebenen Streamanalyse-Informationen analysiert;
einen Verkehrsinformationsspeicher, der die von dem Datendecodierer ausgegebenen Verkehrsinformationen speichert; und
einen Datenrundfunkanwendungsmanager, der die in dem Verkehrsinformationsspeicher gespeicherten Verkehrsinformationen mittels einer Rundfunkanwendung ausgibt.

9. Vorrichtung gemäß Anspruch 8, wobei die Verkehrsinformationen Identifikatorinformationen der Durchschnittsgeschwindigkeit für die Straße, Informationen, die eine Komponentendatenlänge der Durchschnittsgeschwindigkeit für die Straße anzeigen, und Geschwindigkeitsinformationen der Durchschnittsgeschwindigkeit für die Straße enthalten.

10. Vorrichtung gemäß Anspruch 8, wobei die Streamanalyse-Informationen eine Programmabbildungstabelle sind.

11. Verfahren zum Empfangen von Verkehrsinformationen, das Folgendes umfasst:
Empfangen von Rundfunksignalen, die durch Multiplexieren von Verkehrsinformationen und Streamanalyse-Informationen zum Analysieren von Verkehrsinformationen erhalten wurden, zu Rundfunktransportstreams, wobei die Verkehrsinformationen Folgendes enthalten:
- Informationen, die einer Durchschnittsgeschwindigkeit für eine Straße entsprechen;
- eine Sprachcode-Information, welche die verwendete Sprache anzeigt;
- eine zweite Standortinformation, die eine Breitengrad- und eine Längengradinformation einer Position auf der Straße enthält; und
- eine erste Standortinformation, die einem der Straße zugeordneten Standort entspricht; und
Demodulieren der Rundfunksignale unter Berücksichtigung von zeitabhängig veränderten Streupilotsignalen und zeitabhängig fixierten Fortsetzungspilotsignalen innerhalb eines Frames der empfangenen Rundfunksignale;
Decodieren der demodulierten Signale, um die Rundfunktransportstreams zu erhalten;
Analysieren der Verkehrsinformationen unter Verwendung von Deskriptortabelleninformationen unter den Rundfunktransportstreams; und
Ausgeben eines Verkehrsinformationsdienstes unter Verwendung der Verkehrsinformationen.

12. Verfahren gemäß Anspruch 11, wobei die Verkehrsinformationen Identifikatorinformationen der Durchschnittsgeschwindigkeit für die Straße, Informationen, die eine Komponentendatenlänge der Durchschnittsgeschwindigkeit für die Straße anzeigen, und Geschwindigkeitsinformationen der Durchschnittsgeschwindigkeit für die Straße enthalten.

13. Verfahren gemäß Anspruch 11, wobei die Verkehrsinformationen Namensinformationen des Verkehrsinformationsdienstes und/oder Beschreibungsinformationen des Verkehrsinformationsdienstes und/oder Logo-Informationen des Dienstes und/oder Abonnenten-Informationen des Dienstes und/oder Zusatzinformationen des Dienstes und/oder Hilfe-Informationen, auf die ein Nutzer zurückgreifen kann, enthalten.

14. Verfahren gemäß Anspruch 11, wobei die Streamanalyse-Informationen eine Programmabbildungstabelle sind.

15. Verfahren gemäß Anspruch 11 bis 14, wobei die Durchschnittsgeschwindigkeit für die Straße in dem Multiplexierungsschritt eine vorhergesagte Durchschnittsgeschwindigkeit für die Straße ist.

## Revendications

1. Procédé de transmission d'informations de trafic, le procédé comprenant :
le multiplexage d'informations de trafic, de signaux audio, de signaux vidéo et d'informations d'analyse syntaxique de flux dans des signaux de transport de diffusion, dans lequel les informations de trafic comprennent :
- des informations correspondant à une vitesse moyenne pour une route ;
- des informations de code de langue indiquant la langue utilisée ;
- des premières informations d'emplacement correspondant à un emplacement associé à la route ; et
- des deuxièmes informations d'emplacement comprenant des informations de latitude et de longitude d'une position sur la route ;
le codage des signaux multiplexés contre une erreur et l'entrelacement des signaux codés ;
le mappage respectivement de signaux pilotes de dispersion variables dans le temps et de signaux pilotes de continuation invariables dans le temps à l'intérieur d'une trame des signaux entrelacés ;
la modulation des signaux mappés par un schéma de multiplexage à division de fréquence orthogonale et l'insertion d'un intervalle de garde dans une trame des signaux modulés, l'intervalle de garde faisant partie des signaux modulés ; et
la conversion des signaux, dans lesquels l'intervalle de garde est inséré, en signaux de radiofréquence et la transmission des signaux convertis.

2. Procédé selon la revendication 1, dans lequel les informations d'analyse syntaxique de flux à l'étape de multiplexage constituent un tableau de mappage de programme.

3. Procédé selon la revendication 1 ou 2, dans lequel les informations de trafic comprennent des informations d'identification de la vitesse moyenne pour la route, des informations indiquant la longueur des données de composantes de la vitesse moyenne pour la route, et des informations de vitesse de la vitesse moyenne pour la route.

4. Procédé selon l'une des revendications 1 à 3, dans lequel la vitesse moyenne pour la route à l'étape de multiplexage est une vitesse moyenne prédite pour la route.

5. Appareil de transmission d'informations de trafic, comprenant :
un multiplexeur multiplexant des signaux audio, des signaux vidéo, des signaux de données comprenant des informations de trafic et des informations d'analyse syntaxique de flux effectuant l'analyse syntaxique d'informations de tableau de descripteurs des informations de trafic en signaux de transport de diffusion, dans lequel les informations de trafic comprennent :
- des informations correspondant à une vitesse moyenne pour une route ;
- des informations de code de langue indiquant la langue utilisée ;
- des deuxièmes informations d'emplacement comprenant des informations de latitude et de longitude d'une position sur la route ; et
- des premières informations d'emplacement correspondant à un emplacement associé à la route ;
un codeur codant les signaux multiplexés contre une erreur et entrelaçant les signaux codés ;
un mappeur mappant des signaux pilotes de dispersion variables dans le temps et des signaux pilotes de continuation invariables dans le temps à l'intérieur d'une trame des signaux codés par le codeur ;
un générateur de trame modulant les signaux mappés par le mappeur par un schéma de multiplexage à division de fréquence orthogonale et insérant un intervalle de garde dans la trame des signaux modulés, l'intervalle de garde faisant partie des signaux modulés ; et
un émetteur convertissant les signaux, dans lesquels l'intervalle de garde est inséré, en signaux de radiofréquence et transmettant les signaux de radiofréquence convertis.

6. Appareil selon la revendication 5, dans lequel les informations de trafic comprennent des informations d'identification de la vitesse moyenne pour la route, des informations indiquant la longueur des données de composantes de la vitesse moyenne pour la route, et des informations de vitesse de la vitesse moyenne pour la route.

7. Appareil selon la revendication 5, dans lequel les informations de trafic multiplexées par le multiplexeur comprennent au moins l'un d'un nom de service d'information de trafic, d'une description du service d'information de trafic, d'une information de logo du service, d'une information d'abonné du service, d'une information en texte libre et d'une information d'aide à laquelle un utilisateur fait référence.

8. Appareil pour recevoir des informations de trafic, comprenant :
un syntoniseur recevant des signaux de diffusion comprenant des informations de trafic et des informations d'analyse syntaxique de flux d'informations de trafic, dans lequel les informations de trafic comprennent :
- des informations correspondant à une vitesse moyenne pour une route ;
- des informations de code de langue indiquant la langue utilisée ;
- des deuxièmes informations d'emplacement comprenant des informations de latitude et de longitude d'une position sur la route ; et
- des premières informations d'emplacement correspondant à un emplacement associé à la route ;
un démodulateur démodulant les signaux de diffusion en tenant compte des signaux pilotes variables dans le temps et des signaux pilotes invariables dans le temps à l'intérieur d'une trame des signaux de diffusion reçus par le syntoniseur ;
un démultiplexeur démultiplexant des signaux de données comprenant les informations de trafic et les informations d'analyse syntaxique de flux des informations de trafic parmi les signaux démodulés ;
un décodeur de données délivrant les informations de trafic provenant des signaux de données et effectuant l'analyse syntaxique des informations d'analyse syntaxique de flux délivrées par le démultiplexeur ;
une mémoire d'informations de trafic stockant les informations de trafic délivrées par le décodeur de données ; et
un gestionnaire d'application de diffusion de données délivrant les informations de trafic stockées dans la mémoire d'informations de trafic en utilisant une application de diffusion.

9. Appareil selon la revendication 8, dans lequel les informations de trafic comprennent des informations d'identification de la vitesse moyenne pour la route, des informations indiquant la longueur des données de composantes de la vitesse moyenne pour la route, et des informations de vitesse de la vitesse moyenne pour la route.

10. Appareil selon la revendication 8, dans lequel les informations d'analyse syntaxique de flux constituent un tableau de mappage de programme.

11. Procédé pour recevoir des informations de trafic, comprenant :
la réception de signaux de diffusion obtenus en multiplexant des informations de trafic et des informations d'analyse syntaxique de flux pour effectuer l'analyse syntaxique des informations de trafic dans des flux de transport de diffusion, dans lequel les informations de trafic comprennent :
- des informations correspondant à une vitesse moyenne pour une route ;
- des informations de code de langue indiquant la langue utilisée ;
- des deuxièmes informations d'emplacement comprenant des informations de latitude et de longitude d'une position sur la route ; et
- des premières informations d'emplacement correspondant à un emplacement associé à la route ;
la démodulation des signaux de diffusion en tenant compte des signaux pilotes de dispersion variables dans le temps et des signaux pilotes de continuation invariables dans le temps à l'intérieur d'une trame des signaux de diffusion reçus ;
le décodage des signaux démodulés pour obtenir les flux de transport de diffusion ;
l'analyse syntaxique des informations de trafic en utilisant des informations de tableau de descripteurs parmi les flux de transport de diffusion ; et
la prestation d'un service d'information de trafic en utilisant les informations de trafic.

12. Procédé selon la revendication 11, dans lequel les informations de trafic comprennent des informations d'identification de la vitesse moyenne pour la route, des informations indiquant la longueur des données de composantes de la vitesse moyenne pour la route, et des informations de vitesse de la vitesse moyenne pour la route.

13. Procédé selon la revendication 11, dans lequel les informations de trafic comprennent au moins l'une d'une information de nom de service d'information de trafic, d'une information de description du service d'information de trafic, d'une information de logo du service, d'une information d'abonné du service, d'une information complémentaire du service et d'une information d'aide à laquelle un utilisateur fait référence.

14. Procédé selon la revendication 11, dans lequel les informations d'analyse syntaxique de flux constituent un tableau de mappage de programme.

15. Procédé selon l'une des revendications 11 à 14, dans lequel la vitesse moyenne pour la route à l'étape de multiplexage est une vitesse moyenne prédite pour la route.
